# EUROPEAN PATENT APPLICATION

(11) **EP 4 741 293 A1**
(43) Date of publication of application: **13.05.2026**
(21) Application number: 25166551.9
(22) Date of filing: 27.03.2025
(51) Int. Cl.: B64G 7/00

(54) **MICRO-LOW GRAVITY SIMULATION TEST APPARATUS AND TEST METHOD**

(30) Priority: 11.11.2024 CN 202411605233
(71) Applicant: China Building Materials Academy Co., Ltd., Beijing 100024 (CN); China National Building Material Group Co., Ltd., Beijing 100084 (CN)
(72) Inventor: ZHI, Xiao, Beijing, 100024 (CN); WU, Hao, Beijing, 100024 (CN); LIU, Yaojun, Beijing, 100024 (CN); MA, Zhongcheng, Beijing, 100024 (CN); GAO, Chunyong, Beijing, 100024 (CN); LIU, Yun, Beijing, 100024 (CN); GUO, Junhua, Beijing, 100024 (CN)
(74) Representative: Bryn Aarflot AS

(57) **Abstract**

The present disclosure relates to the technical field of environmental tests and discloses a micro-low gravity simulation test apparatus and a test method. The apparatus includes a first frame (100), a first speed sensor, and a second speed sensor. A second frame (200) that is driven by a first drive assembly to rotate around a first direction is arranged in the first frame. A clamping member (300) that is driven by a second drive assembly to rotate around a second direction and is configured to fix a test sample is arranged in the second frame (200). The first speed sensor is configured to detect a speed of rotation of the second frame (200) around the first direction to obtain a first speed, transmit the first speed to a control system, and correct an operating power of the first drive assembly. The second speed sensor is configured to detect a speed of rotation of the clamping member (300) around the second direction to obtain a second speed, transmit the second speed to the control system, and correct an operating power of the second drive assembly. The present disclosure can ensure that a sample of an inorganic non-metallic material is accurately maintained in a required micro-low gravity environment for testing.

## Description

### TECHNICAL FIELD

The present disclosure relates to the technical field of environmental tests, in particular to a micro-low gravity simulation test apparatus and a test method.

### BACKGROUND

In recent years, a space demand is growing, a space technology is developing constantly, and more and more inorganic non-metallic materials are also applied to the construction of a space base, so more stringent requirements are put forward for various performance indexes of the inorganic non-metallic materials subjected to a complex space environment. A micro-low gravity environment may significantly affect curing molding performance and structural service performance of the inorganic non-metallic materials, and conducting adequate micro-low gravity simulation tests is one of key technical links in assessing the reliability and lifetime of the inorganic non-metallic materials.

It is difficult to implement a micro-low gravity test study in an actual space environment, and it is necessary to simulate an operating state of micro-low gravity in space in a gravity environment of the Earth. Most of existing micro-low gravity simulation test apparatuses adopt micro-low gravity simulation technologies such as an air flotation method, a suspension method, and a falling tower method, but the above micro-low gravity simulation technologies are difficult to conduct and implement under thermal vacuum conditions, it is not convenient to accurately simulate different micro-low gravity environments, and applicability is poor.

### SUMMARY OF THE INVENTION

In view of this, the present disclosure provides a micro-low gravity simulation test apparatus and a test method to solve problems that existing micro-low gravity simulation test apparatuses are difficult to conduct and implement under thermal vacuum conditions, and it is not convenient to accurately simulate different micro-low gravity environments.

**In** a first aspect, the present disclosure provides a micro-low gravity simulation test apparatus, applied in a vacuum tank, and including:
a first frame, configured to be arranged on a workbench in the vacuum tank;
a second frame, rotatably connected in the first frame, and driven by a first drive assembly to rotate around a first direction;
a clamping member, configured to clamp and fix a test sample, wherein the clamping member is rotatably connected in the second frame, and is driven by a second drive assembly to rotate around a second direction, and the second direction and the first direction are perpendicular to each other and are located in the same horizontal plane;
a first speed sensor, configured to detect a speed of rotation of the second frame around the first direction to obtain a first speed, and transmit the first speed to a control system; wherein the control system is configured to compare the first speed with a first standard rotation speed to obtain a first offset value, correct an operating power of the first drive assembly according to the first offset value, and control the first drive assembly to rotate according to the corrected operating power of the first drive assembly; and
a second speed sensor, configured to detect a speed of rotation of the clamping member around the second direction to obtain a second speed, and transmit the second speed to the control system; wherein the control system is configured to compare the second speed with a second standard rotation speed to obtain a second offset value, correct an operating power of the second drive assembly according to the second offset value, and control the second drive assembly to rotate according to the corrected operating power of the second drive assembly.

The micro-low gravity simulation test apparatus according to the present disclosure at least has the following beneficial effects.

The first drive assembly drives the second frame to rotate in the first direction, the second drive assembly drives the clamping member to rotate around the second direction, so that the test sample rotates around the second direction while rotating around the first direction, a centrifugal force generated during a rotation movement process may offset part of gravity, and a micro-low-gravity environment is simulated by a mechanical rotation method, which meets requirements for conducting and implementing a micro-low gravity environment simulation test in the vacuum tank under thermal vacuum conditions. At the same time, the first speed of the actual rotation of the second frame is obtained by real-time detection of the first speed sensor, the first speed is compared with the first standard rotation speed to obtain the first offset value, the operating power of the first drive assembly is corrected according to the first offset value, and the first drive assembly is controlled to rotate according to the corrected operating power of the first drive assembly, thus ensuring that the second frame accurately rotates around the first direction at the first standard rotation speed. **In** addition, the second speed of the actual rotation of the clamping member is obtained by real-time detection of the second speed sensor, the second speed is compared with the second standard rotation speed to obtain the second offset value, the operating power of the second drive assembly is corrected according to the second offset value, and the second drive assembly is controlled to rotate according to the corrected operating power of the second drive assembly, thus ensuring that the clamping member accurately rotates around the second direction at the second standard rotation speed. Therefore, it is ensured that the test sample rotates accurately for a long time around the first direction at the first standard rotation speed and around the second direction at the second standard rotation speed, thus ensuring that the test sample is maintained for a long time in the required micro-low gravity environment for testing, ensuring the accuracy of the test. Because magnitude of the centrifugal force generated by the rotation may be changed by changing the first standard rotation speed and the second standard rotation speed, magnitude of an acceleration vector to which the test sample is subjected may be changed by adjusting speeds at which the test sample rotates around the first direction and the second direction, so as to realize simulations of more micro-low gravity environments, meet test requirements for different space micro-low gravity environments, and improve applicability of the test.

In an optional implementation, the micro-low gravity simulation test apparatus further includes a force sensor. The force sensor is configured to detect a first gravity value to which the test sample is subjected and transmit the first gravity value to the control system. The control system is configured to compare the first gravity value with a standard micro-low gravity value to obtain a gravity offset value, obtain a first component compensation rotation speed around the first direction and a second component compensation rotation speed around the second direction by decomposition calculation according to the gravity offset value, correct the operating power of the first drive assembly according to the first component compensation rotation speed and control the first drive assembly to rotate according to the corrected operating power of the first drive assembly, and correct the operating power of the second drive assembly according to the second component compensation rotation speed and control the second drive assembly to rotate according to the corrected operating power of the second drive assembly.

In an optional implementation, the first drive assembly includes a first motor arranged on the first frame and extending in a third direction, a first worm gear reducer is connected to an output end of the first motor, an output end of the first worm gear reducer is coaxially connected to the second frame, and every two selected from the first direction, the second direction, and the third direction are perpendicular to each other.

In an optional implementation, the second drive assembly includes a second motor arranged on the second frame and extending in the third direction, a second worm gear reducer is connected to an output end of the second motor, and an output end of the second worm gear reducer is coaxially connected to the clamping member.

In an optional implementation, the first motor and the second motor are configured to be high-and-low temperature resistant motors.

In an optional implementation, a U-shaped groove is formed in an upper end of the first frame in the third direction, and the second frame is rotatably connected in the U-shaped groove.

In an optional implementation, the first motor is located under the first worm gear reducer in the third direction.

In an optional implementation, the control system is provided with a display.

In an optional implementation, a mounting through groove is formed in the second frame in a penetrating manner along a thickness direction thereof, and the clamping member is rotatably connected in the mounting through groove;
and/or, the second frame is rotatably connected in the first frame by means of a first ceramic oil-free bearing;
and/or, the clamping member is rotatably connected in the second frame by means of a second ceramic oil-free bearing.

In a second aspect, the present disclosure further provides a test method, applied by the test apparatus provided by the above first aspect, and including the following steps:
mounting the test apparatus on a workbench in a vacuum tank, and mounting and fixing a test sample to be tested on the clamping member;
inputting a standard micro-low gravity acceleration value required for a test into a control system;
driving, by a first drive assembly and a second drive assembly, the test sample made of an inorganic non-metallic material to rotate around a first direction and a second direction respectively;
detecting, by a first speed sensor, a speed of rotation of a second frame around the first direction to obtain a first speed, and transmitting the first speed to the control system; comparing, by the control system, the first speed with a first standard rotation speed to obtain a first offset value, and correcting an operating power of the first drive assembly according to the first offset value;
detecting, by a second speed sensor, a speed of rotation of the clamping member around the second direction to obtain a second speed, and transmitting the second speed to the control system; and comparing, by the control system, the second speed with a second standard rotation speed to obtain a second offset value, and correcting an operating power of the second drive assembly according to the second offset value.

The test method according to the present disclosure at least has the following beneficial effects.

The first drive assembly drives the second frame to rotate in the first direction, the second drive assembly drives the clamping member to rotate around the second direction, so that the test sample rotates around the second direction while rotating around the first direction, a centrifugal force generated during a rotation movement process may offset part of gravity, and a micro-low-gravity environment is simulated by a mechanical rotation method, which meets requirements for conducting and implementing a micro-low gravity environment simulation test in the vacuum tank under thermal vacuum conditions. A total amount of acceleration generated during a rotation movement process of the test sample around the first direction and the second direction is further obtained by inputting a standard micro-low gravity acceleration into the control system, and comparing a gravity acceleration of the earth with the standard micro-low gravity acceleration, and the first standard rotation speed around the first direction and the second standard rotation speed around the second direction are obtained by decomposition calculation according to the total amount of acceleration. At the same time, the first speed of the actual rotation of the second frame is obtained by real-time detection of the first speed sensor, the first speed is compared with the first standard rotation speed to obtain the first offset value, the operating power of the first drive assembly is corrected according to the first offset value, and the first drive assembly is controlled to rotate according to the corrected operating power of the first drive assembly, thus ensuring that the second frame accurately rotates around the first direction at the first standard rotation speed. In addition, the second speed of the actual rotation of the clamping member is obtained by real-time detection of the second speed sensor, the second speed is compared with the second standard rotation speed to obtain the second offset value, the operating power of the second drive assembly is corrected according to the second offset value, and the second drive assembly is controlled to rotate according to the corrected operating power of the second drive assembly, thus ensuring that the clamping member accurately rotates around the second direction at the second standard rotation speed. Therefore, it is ensured that the test sample rotates accurately for a long time around the first direction at the first standard rotation speed and around the second direction at the second standard rotation speed, thus ensuring that the test sample is maintained for a long time in the required micro-low gravity environment for testing, ensuring the accuracy of the test. Because magnitude of the centrifugal force generated by the rotation may be changed by changing the first standard rotation speed and the second standard rotation speed, magnitude of an acceleration vector to which the test sample is subjected may be changed by adjusting speeds at which the test sample rotates around the first direction and the second direction, so as to realize simulations of more micro-low gravity environments, meet test requirements for different space micro-low gravity environments, and improve applicability of the test.

### BRIEF DESCRIPTION OF THE DRAWINGS

In order to more clearly illustrate technical solutions in specific implementations of the present disclosure or the prior art, accompanying drawings that need to be used in the description of the specific implementations or the prior art will be briefly introduced below. It is obvious that the accompanying drawings in the following description show some implementations of the present disclosure, and for those of ordinary skill in the art, other accompanying drawings may further be obtained according to these accompanying drawings without creative work.
FIG. 1 is a schematic diagram of a three-dimensional structure of a micro-low gravity simulation test apparatus of an embodiment of the present disclosure.
FIG. 2 is a schematic diagram of a breakdown structure of FIG. 1.

Description of reference numerals:
100-first frame, 110-U-shaped groove, 120-first ceramic oil-free bearing;
200-second frame, 210-mounting through groove;
300-clamping member;
410-first motor, 420-first worm gear reducer;
510-second motor, and 520-second worm gear reducer.

### DETAILED DESCRIPTION

In order to make an objective, technical schemes and advantages of embodiments of the present disclosure clearer, the technical schemes in the embodiments of present disclosure will be clearly and completely described below in combination with accompanying drawings in the embodiments of the present disclosure. Apparently, described embodiments are part of embodiments of the present disclosure, not all of them. Based on the embodiments of the present disclosure, all other embodiments obtained by those of skill in the art without creative work shall fall within the protection scope of the present disclosure.

In the description of this embodiment, it needs to be noted that orientations or position relationships indicated by terms such as "center", "on", "below", "left", "right", "perpendicular", "horizontal", "inside" and "outside" are orientations or position relationships shown based on the accompanying drawings, and are used only for facilitating the description of this embodiment and for simplifying the description, rather than indicating or implying that a mentioned apparatus or element must have a particular orientation or must be constructed and operated in a particular orientation, thus cannot be understood as a limitation on the this embodiment. In addition, terms "first", "second", and "third" are used only for the purpose of description, and cannot be understood as indicating or implying relative importance.

In the description of this embodiment, it needs to be noted that, unless otherwise expressly specified and limited, terms "mounted", "connected", and "connection" should be understood in a broad sense, for example, as a fixed connection, as a detachable connection, or as an integral connection; as a mechanical connection, or as an electrical connection; and as a direct connection, as an indirect connection through an intermediate medium, and as communication within two elements. For those of ordinarily skill in the art, the specific meanings of the above terms in this embodiment may be understood according to specific circumstances.

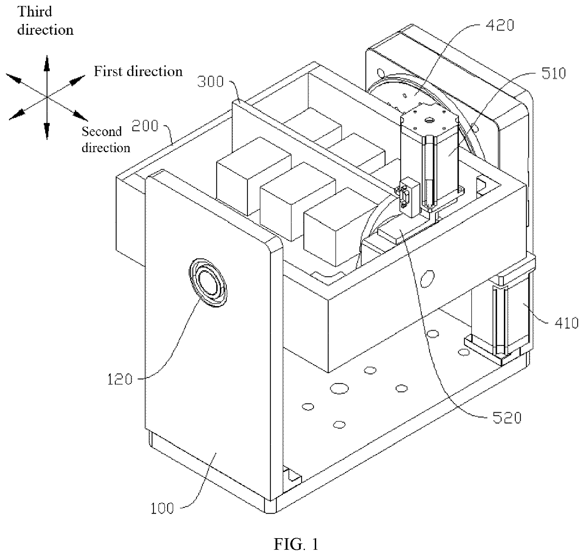

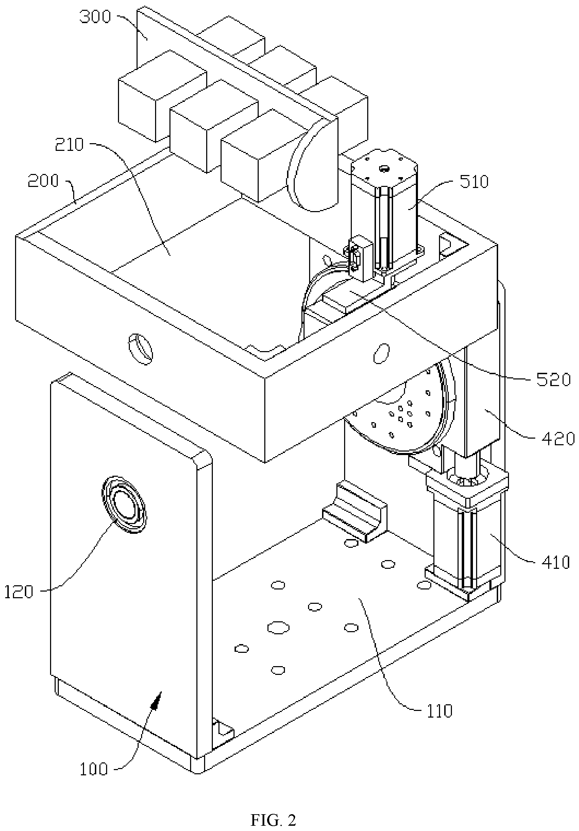

The embodiments of the present disclosure are described below in conjunction with FIG. 1 and FIG. 2.

According to a first aspect of the embodiments of the present disclosure, a micro-low gravity simulation test apparatus is provided, and applied in a vacuum tank. The test apparatus includes a first frame 100, a first speed sensor, and a second speed sensor. The first frame 100 is configured to be arranged on a workbench in the vacuum tank. A second frame 200 is rotatably connected in the first frame 100, and driven by a first drive assembly to rotate around a first direction. A clamping member 300 is rotatably connected in the second frame 200, configured to clamp and fix a test sample, and is driven by a second drive assembly to rotate around a second direction. The test sample in this embodiment is preferably an inorganic non-metallic material sample. The first speed sensor is configured to detect a speed of rotation of the second frame 200 around the first direction to obtain a first speed, and transmit the first speed to a control system. The control system is configured to compare the first speed with a first standard rotation speed to obtain a first offset value, correct an operating power of the first drive assembly according to the first offset value, and control the first drive assembly to rotate according to the corrected operating power of the first drive assembly. The second speed sensor is configured to detect a speed of rotation of the clamping member 300 around the second direction to obtain a second speed, and transmit the second speed to the control system. The control system is configured to compare the second speed with a second standard rotation speed to obtain a second offset value, correct an operating power of the second drive assembly according to the second offset value, and control the second drive assembly to rotate according to the corrected operating power of the second drive assembly. The first direction, the second direction, and the third direction described herein refer to a first direction, a second direction, and a third direction in FIG. 1. Every two selected from the first direction, the second direction, and the third direction are perpendicular to each other, and the first direction and the second direction are located in the same horizontal plane.

According to the test apparatus of this embodiment, the first drive assembly drives the second frame 200 to rotate in the first direction, the second drive assembly drives the clamping member 300 to rotate around the second direction, so that the test sample made of an inorganic non-metallic material rotates around the second direction while rotating around the first direction, a centrifugal force generated during a rotation movement process may offset part of gravity, and a micro-low-gravity environment is simulated by a mechanical rotation method, which meets requirements for conducting and implementing a micro-low gravity environment simulation test in the vacuum tank under thermal vacuum conditions. At the same time, the first speed of the actual rotation of the second frame 200 is obtained by real-time detection of the first speed sensor, the first speed is compared with the first standard rotation speed to obtain the first offset value, the operating power of the first drive assembly is corrected according to the first offset value, and the first drive assembly is controlled to rotate according to the corrected operating power of the first drive assembly, thus ensuring that the second frame 200 accurately rotates around the first direction at the first standard rotation speed. In addition, the second speed of the actual rotation of the clamping member 300 is obtained by real-time detection of the second speed sensor, the second speed is compared with the second standard rotation speed to obtain the second offset value, the operating power of the second drive assembly is corrected according to the second offset value, and the second drive assembly is controlled to rotate according to the corrected operating power of the second drive assembly, thus ensuring that the clamping member 300 accurately rotates around the second direction at the second standard rotation speed. Therefore, it is ensured that the test sample made of the inorganic non-metallic material rotates accurately for a long time around the first direction at the first standard rotation speed and around the second direction at the second standard rotation speed, thus ensuring that the test sample made of the inorganic non-metallic material is maintained for a long time in the required micro-low gravity environment for testing, ensuring the accuracy of the test. Because magnitude of the centrifugal force generated by the rotation may be changed by changing the first standard rotation speed and the second standard rotation speed, magnitude of an acceleration vector to which the test sample made of the inorganic non-metallic material is subjected may be changed by adjusting speeds at which the test sample made of the inorganic non-metallic material rotates around the first direction and the second direction, so as to realize simulations of more micro-low gravity environments, meet test requirements for different space micro-low gravity environments, and improve applicability of the test.

It needs to be noted that when the second frame 200 rotates around the first direction at the first standard rotation speed, the first offset value is zero, i.e. there is no need to correct the operating power of the first drive assembly. When the clamping member 300 rotates around the first direction at the second standard rotation speed, the second offset value is zero, i.e. there is no need to correct the operating power of the second drive assembly.

Specifically, the first standard rotation speed refers to a component rotation speed of the rotation speed of the test sample made of the inorganic non-metallic material around the first direction when the centrifugal force generated during the rotation process of the test sample made of the inorganic non-metallic material offsets part of gravity generated by gravity acceleration of the earth of 9.80 m/s², so that the test sample made of the inorganic non-metallic material is in a required micro-gravity environmental condition (i.e., subjected to the standard micro-gravity acceleration value required for the test). The second standard rotation speed refers to a component rotation speed of the rotation speed of the test sample made of the inorganic non-metallic material around the second direction when the centrifugal force generated during the rotation process of the test sample made of the inorganic non-metallic material offsets part of gravity generated by the gravity acceleration of the earth of 9.80 m/s², so that the test sample made of the inorganic non-metallic material is in a required micro-gravity environmental condition (i.e., subjected to the standard micro-gravity acceleration value required for the test).

It may be understood that the first standard rotation speed and the second standard rotation speed are obtained in the following manner: a total amount of acceleration generated during a rotation movement process of the test sample made of the inorganic non-metallic material around the first direction and the second direction is obtained by comparing a gravity acceleration of the earth with the standard micro-low gravity acceleration, and the first standard rotation speed around the first direction and the second standard rotation speed around the second direction are obtained by decomposition calculation according to the total amount of acceleration, a rotation radius of rotation of the test sample made of the inorganic non-metallic material around the first direction, and a rotation radius of rotation of the test sample made of the inorganic non-metallic material around the second direction.

Taking into account the fact that an area where the test is conducted is subjected to different latitudes, longitudes, altitudes, etc., a gravity acceleration of the earth in the area is not 9.80 m/s² , the sample cannot be subjected to the standard micro-low gravity acceleration value required for the test even if the test sample made of the inorganic non-metallic material rotates around the first direction at the first standard rotation speed, as well as rotates around the second direction at the second standard rotation speed. In order to solve the above problem, in some embodiments, the test apparatus further includes a force sensor. The force sensor is configured to detect a first gravity value to which the test sample made of the inorganic non-metallic material is subjected and transmit the first gravity value to the control system. The control system is configured to compare the first gravity value with a standard micro-low gravity value to obtain a gravity offset value, obtain a first component compensation rotation speed around the first direction and a second component compensation rotation speed around the second direction by decomposition calculation according to the gravity offset value, correct the operating power of the first drive assembly according to the first component compensation rotation speed and control the first drive assembly to rotate according to the corrected operating power of the first drive assembly, and correct the operating power of the second drive assembly according to the second component compensation rotation speed and control the second drive assembly to rotate according to the corrected operating power of the second drive assembly. Compensation of the first standard rotation speed and the second standard rotation speed according to external factors is realized, thus ensuring that the test sample made of the inorganic non-metallic material is accurately maintained for a long time in the required micro-low gravity environment for testing, ensuring the accuracy of the test.

It needs to be noted that when the first gravity value is the same as the standard micro-low gravity value, the gravity offset value is zero.

Specifically, the standard micro-low gravity value refers to gravity generated when the test sample made of the inorganic non-metallic material is subjected to the standard micro-low gravity acceleration required for the test.

Specifically, the control system is provided with a display, which may display the first speed detected and obtained by the first speed sensor, the second speed detected and obtained by the second speed sensor, as well as the first gravity value detected and obtained by the force sensor, so as to facilitate intuitive monitoring by a tester.

It may be understood that the first component compensation rotation speed around the first direction and the second component compensation rotation speed around the second direction obtained by the decomposition calculation according to the gravity offset value are obtained in the following manner: an acceleration offset value is obtained according to the gravity offset value and a weight of the test sample made of the inorganic non-metallic material, and the first component compensation rotation speed around the first direction and the second component compensation rotation speed around the second direction are obtained by decomposition calculation according to the acceleration offset value, the rotation radius of rotation of the test sample made of the inorganic non-metallic material around the first direction, and the rotation radius of rotation of the test sample made of the inorganic non-metallic material around the second direction.

As shown in FIG. 1 and FIG. 2, in some embodiments, the first drive assembly includes a first motor 410 arranged on the first frame 100 and extending in the third direction, a first worm gear reducer 420 is connected to an output end of the first motor 410, an output end of the first worm gear reducer 420 is coaxially connected to the second frame 200. By arranging the first motor 410 in the third direction, a size of the first drive assembly in the first direction is reduced, and a structure of the first worm gear reducer 420 is more compact relative to that of a bevel gear reducer, which makes the test apparatus of this embodiment more miniaturized, and reduces a space occupied by the test apparatus of this embodiment in the vacuum tank, thereby allowing more space to be released inside the vacuum tank, reducing an effect of falling off dust on a test result.

Specifically, the second drive assembly includes a second motor 510 arranged on the second frame 200 and extending in the third direction, a second worm gear reducer 520 is connected to an output end of the second motor 510, and an output end of the second worm gear reducer 520 is coaxially connected to the clamping member 300. By arranging the second motor 510 in the third direction, a size of the second drive assembly in the second direction is reduced, and a structure of the second worm gear reducer 520 is more compact relative to that of a bevel gear reducer, which makes the test apparatus of this embodiment more miniaturized, and reduces a space occupied by the test apparatus of this embodiment in the vacuum tank, thereby allowing more space to be released inside the vacuum tank, reducing an effect of falling off dust on a test result.

Specifically, the first motor 410 and the second motor 510 are configured to be high-and-low temperature resistant motors, so as to allow the test apparatus of this embodiment to conduct and implement the micro-low gravity environment simulation test in the vacuum tank that is under alternating high/low temperature vacuum conditions.

Specifically, a U-shaped groove 110 is formed in an upper end of the first frame 100 in the third direction, the second frame 200 is rotatably connected in the U-shaped groove 110, and the first motor 410 is located under the first worm gear reducer 420 in the third direction. By nesting the second frame 200 as well as the first motor 410 in the U-shaped groove 110, the size of the test apparatus of this embodiment in the third direction may be more effectively reduced, which makes the test apparatus of this embodiment more miniaturized, and reduces a space occupied by the test apparatus of this embodiment in the vacuum tank, thereby allowing more space to be released inside the vacuum tank, reducing an effect of falling off dust on the test result.

Specifically, a mounting through groove 210 is formed in the second frame 200 in a penetrating manner along a thickness direction thereof, and the clamping member 300 is rotatably connected in the mounting through groove 210, thus facilitating clamping and fixing the test sample made of the inorganic non-metallic material to the clamping member 300.

Specifically, the second frame 200 is rotatably connected in the first frame 100 by means of a first ceramic oil-free bearing 120. The clamping member 300 is rotatably connected in the second frame 200 by means of a second ceramic oil-free bearing. A rotation friction coefficient is reduced by the first ceramic oil-free bearing 120 and the second ceramic oil-free bearing, which is conducive to improving the stability of the rotation of the test sample made of the inorganic non-metallic material around the first direction as well as the rotation around the second direction.

According to a second aspect of the embodiments of the present disclosure, a test method is further provided, including the micro-low gravity simulation test apparatus for the inorganic non-metallic material provided by the first aspect of the embodiments of the present disclosure. The test method includes the following steps.

The test apparatus is mounted on a workbench in a vacuum tank, and a test sample made of the inorganic non-metallic material to be tested is mounted and fixed on a clamping member 300.

A standard micro-low gravity acceleration required for a test is inputted into a control system.

The inorganic non-metallic material is driven by a first drive assembly and a second drive assembly to rotate around a first direction and a second direction respectively.

A speed of rotation of a second frame 200 around the first direction is detected by a first speed sensor to obtain a first speed, and the first speed is transmitted to the control system. The control system is configured to compare the first speed with a first standard rotation speed to obtain a first offset value, and correct an operating power of the first drive assembly according to the first offset value.

A speed of rotation of the clamping member 300 around the second direction is detected by a second speed sensor to obtain a second speed, and the second speed is transmitted to the control system. The control system is configured to compare the second speed with a second standard rotation speed to obtain a second offset value, and correct an operating power of the second drive assembly according to the second offset value.

According to the test method of this embodiment, the first drive assembly drives the second frame 200 to rotate in the first direction, the second drive assembly drives the clamping member 300 to rotate around the second direction, so that the test sample made of the inorganic non-metallic material rotates around the second direction while rotating around the first direction, a centrifugal force generated during a rotation movement process may offset part of gravity, and a micro-low-gravity environment is simulated by a mechanical rotation method, which meets requirements for conducting and implementing a micro-low gravity environment simulation test in the vacuum tank under thermal vacuum conditions. A total amount of acceleration generated during a rotation movement process of the test sample made of the inorganic non-metallic material around the first direction and the second direction is further obtained by inputting a standard micro-low gravity acceleration into the control system, and comparing a gravity acceleration of the earth with the standard micro-low gravity acceleration, and the first standard rotation speed around the first direction and the second standard rotation speed around the second direction are obtained by decomposition calculation according to the total amount of acceleration, a rotation radius of rotation of the test sample made of the inorganic non-metallic material around the first direction, and a rotation radius of rotation of the test sample made of the inorganic non-metallic material around the second direction. At the same time, the first speed of the actual rotation of the second frame 200 is obtained by real-time detection of the first speed sensor, the first speed is compared with the first standard rotation speed to obtain the first offset value, the operating power of the first drive assembly is corrected according to the first offset value, and the first drive assembly is controlled to rotate according to the corrected operating power of the first drive assembly, thus ensuring that the second frame 200 accurately rotates around the first direction at the first standard rotation speed. In addition, the second speed of the actual rotation of the clamping member 300 is obtained by real-time detection of the second speed sensor, the second speed is compared with the second standard rotation speed to obtain the second offset value, the operating power of the second drive assembly is corrected according to the second offset value, and the second drive assembly is controlled to rotate according to the corrected operating power of the second drive assembly, thus ensuring that the clamping member 300 accurately rotates around the second direction at the second standard rotation speed. Therefore, it is ensured that the test sample made of the inorganic non-metallic material rotates accurately for a long time around the first direction at the first standard rotation speed and around the second direction at the second standard rotation speed, thus ensuring that the test sample made of the inorganic non-metallic material is maintained for a long time in the required micro-low gravity environment for testing, ensuring the accuracy of the test. Because magnitude of the centrifugal force generated by the rotation may be changed by changing the first standard rotation speed and the second standard rotation speed, magnitude of an acceleration vector to which the test sample made of the inorganic non-metallic material is subjected may be changed (i.e., the magnitude of the standard micro-low gravity acceleration is changed) by adjusting speeds at which the test sample made of the inorganic non-metallic material rotates around the first direction and the second direction, so as to realize simulations of more micro-low gravity environments, meet test requirements for different space micro-low gravity environments, and improve applicability of the test.

It may be understood that obtaining the first standard rotation speed around the first direction and the second standard rotation speed around the second direction by decomposition calculation according to the total amount of acceleration specifically includes the following: a rotation radius of rotation of the test sample made of the inorganic non-metallic material around the first direction and a rotation radius of rotation of the test sample made of the inorganic non-metallic material around the second direction are obtained, and the first standard rotation speed around the first direction and the second standard rotation speed around the second direction are obtained by decomposition calculation according to the total amount of acceleration, a rotation radius of rotation of the test sample made of the inorganic non-metallic material around the first direction, and a rotation radius of rotation of the test sample made of the inorganic non-metallic material around the second direction.

Although the embodiments of the present disclosure are described in conjunction with the accompanying drawings, various modifications and variations may be made by those of skill in the art without departing from the spirit and scope of the present disclosure, and such modifications and variations fall within the scope defined by the present disclosure.

## Claims

1. A micro-low gravity simulation test apparatus, applied in a vacuum tank, and comprising:
a first frame (100), configured to be arranged on a workbench in the vacuum tank;
a second frame (200), rotatably connected in the first frame (100), and driven by a first drive assembly to rotate around a first direction;
a clamping member (300), configured to clamp and fix a test sample, wherein the clamping member (300) is rotatably connected in the second frame (200), and is driven by a second drive assembly to rotate around a second direction, and the second direction and the first direction are perpendicular to each other and are located in the same horizontal plane;
a first speed sensor, configured to detect a speed of rotation of the second frame (200) around the first direction to obtain a first speed, and transmit the first speed to a control system; wherein the control system is configured to compare the first speed with a first standard rotation speed to obtain a first offset value, correct an operating power of the first drive assembly according to the first offset value, and control the first drive assembly to rotate according to the corrected operating power of the first drive assembly; and
a second speed sensor, configured to detect a speed of rotation of the clamping member (300) around the second direction to obtain a second speed, and transmit the second speed to the control system; wherein the control system is configured to compare the second speed with a second standard rotation speed to obtain a second offset value, correct an operating power of the second drive assembly according to the second offset value, and control the second drive assembly to rotate according to the corrected operating power of the second drive assembly.

2. The micro-low gravity simulation test apparatus according to claim 1, further comprising a force sensor, wherein the force sensor is configured to detect a first gravity value to which the test sample is subjected and transmit the first gravity value to the control system; the control system is configured to compare the first gravity value with a standard micro-low gravity value to obtain a gravity offset value, obtain a first component compensation rotation speed around the first direction and a second component compensation rotation speed around the second direction by decomposition calculation according to the gravity offset value, correct the operating power of the first drive assembly according to the first component compensation rotation speed and control the first drive assembly to rotate according to the corrected operating power of the first drive assembly, and correct the operating power of the second drive assembly according to the second component compensation rotation speed and control the second drive assembly to rotate according to the corrected operating power of the second drive assembly.

3. The micro-low gravity simulation test apparatus according to claim 1 or 2, wherein the first drive assembly comprises a first motor (410) arranged on the first frame (100) and extending in a third direction, a first worm gear reducer (420) is connected to an output end of the first motor (410), an output end of the first worm gear reducer (420) is coaxially connected to the second frame (200); and every two selected from the first direction, the second direction, and the third direction are perpendicular to each other.

4. The micro-low gravity simulation test apparatus according to claim 3, wherein the second drive assembly comprises a second motor (510) arranged on the second frame (200) and extending along the third direction, a second worm gear reducer (520) is connected to an output end of the second motor (510), and an output end of the second worm gear reducer (520) is coaxially connected to the clamping member (300).

5. The micro-low gravity simulation test apparatus according to claim 4, wherein the first motor (410) and the second motor (510) are configured to be high-and-low temperature resistant motors.

6. The micro-low gravity simulation test apparatus according to claim 3, wherein a U-shaped groove (110) is formed in an upper end of the first frame (100) in the third direction, and the second frame (200) is rotatably connected in the U-shaped groove (110).

7. The micro-low gravity simulation test apparatus according to claim 6, wherein the first motor (410) is located under the first worm gear reducer (420) in the third direction.

8. The micro-low gravity simulation test apparatus according to claim 2, wherein the control system is provided with a display.

9. The micro-low gravity simulation test apparatus according to claim 1 or 2, wherein
a mounting through groove (210) is formed in the second frame (200) in a penetrating manner along a thickness direction thereof, and the clamping member (300) is rotatably connected in the mounting through groove (210);
and/or, the second frame (200) is rotatably connected in the first frame (100) by means of a first ceramic oil-free bearing (120);
and/or, the clamping member (300) is rotatably connected in the second frame (200) by means of a second ceramic oil-free bearing.

10. A test method, applied by a test apparatus according to any one of claims 1 to 9, and comprising the following steps:
mounting the test apparatus on a workbench in a vacuum tank, and mounting and fixing a test sample to be tested on the clamping member (300);
inputting a standard micro-low gravity acceleration required for a test into a control system;
driving, by a first drive assembly and a second drive assembly, the test sample made of an inorganic non-metallic material to rotate around a first direction and a second direction respectively;
detecting, by a first speed sensor, a speed of rotation of the second frame (200) around the first direction to obtain a first speed, and transmitting the first speed to the control system; comparing, by the control system, the first speed with a first standard rotation speed to obtain a first offset value, and correcting an operating power of the first drive assembly according to the first offset value; and
detecting, by a second speed sensor, a speed of rotation of the clamping member (300) around the second direction to obtain a second speed, and transmitting the second speed to the control system; comparing, by the control system, the second speed with a second standard rotation speed to obtain a second offset value, and correcting an operating power of the second drive assembly according to the second offset value.
